(19) Europäisches Patentamt
European Patent Office
Office européen des brevets

(11) Veröffentlichungsnummer: **0 056 947**
**B1**

(12) # EUROPÄISCHE PATENTSCHRIFT

(45) Veröffentlichungstag der Patentschrift: **28.03.84**

(21) Anmeldenummer: **82100177.3**

(22) Anmeldetag: **13.01.82**

(51) Int. Cl.³: **C 09 B 67/22**, C 09 B 44/04, C 09 B 26/04, C 09 B 57/06, D 06 P 1/41

(54) **Verfahren zum Färben von sauermodifizierten Synthesefasern.**

(30) Priorität: **24.01.81 DE 3102316**

(43) Veröffentlichungstag der Anmeldung: **04.08.82 Patentblatt 82/31**

(45) Bekanntmachung des Hinweises auf die Patenterteilung: **28.03.84 Patentblatt 84/13**

(84) Benannte Vertragsstaaten: **CH DE FR GB IT LI**

(56) Entgegenhaltungen:
**CH - B - 9 356**
**FR - A - 2 231 808**
**FR - A - 2 428 663**
**US - A - 3 942 946**

**CHEMICAL ABSTRACTS, Band 84, Nr. 20, 17. Mai 1976, Seite 84, Nr. 137129c, Columbus, Ohio, USA**
**CHEMICAL ABSTRACTS, Band 84, Nr. 20, 17. Mai 1976, Seite 84, Nr. 137130w, Columbus, Ohio, USA**

(73) Patentinhaber: **BAYER AG, Konzernverwaltung RP Patentabteilung, D-5090 Leverkusen 1 Bayerwerk (DE)**

(72) Erfinder: **Foppe, Reimund, Rheinstrasse 162, D-5090 Leverkusen 1 (DE)**
Erfinder: **Raue, Roderich, Dr., Berta-von-Suttner-Strasse 48, D-5090 Leverkusen (DE)**
Erfinder: **Kühlthau, Hans-Peter, Dr., Paul-Klee-Strasse 48, D-5090 Leverkusen (DE)**

**EP 0 056 947 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zum Färben von sauermodifizierten Synthesefasern

Es sind bereits zahlreiche Mischungen von kationischen Farbstoffen bekannt, die sauermodifizierte Synthesefasern in schwarzen Tönen färben. So sind beispielsweise aus der US-A-3 942 946 den JP-A-75-145 680 und -75-145 681 und der FR-A-2 231 808 Schwarzmischungen aus 4 und mehr kationischen Farbstoffen bekannt, die sich zum Färben von sauermodifizierten Polyesterfasern eignen.

In der FR-A-2 428 663 werden schwarze Farbstofflösungen beschrieben, die vorzugsweise zum Färben von Polyacrylnitrilfasern verwendet werden. Ebenso sind Mischungen bekannt, die sauermodifizierte Synthesefasern in anderen Farbtönen umfärben. Z.B. werden in der CH-B-9356/75 Mischungen beschrieben, die Polyacrylnitrilmaterialien in reinen Blautönen färben.

Gegenstand der Erfindung ist ein Verfahren zum Färben von sauermodifizierten Synthesefasern, insbesondere von Polyacrylnitrilmaterialien, in tiefen schwarzen Farbtönen, dadurch gekennzeichnet, dass man eine Mischung von Farbstoffen der allgemeinen Formel

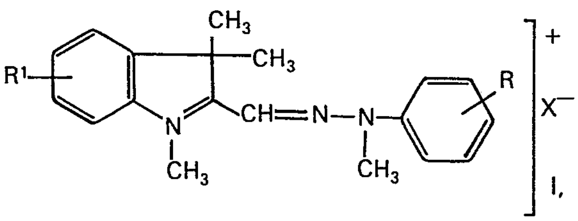

I,

in welcher

R und $R^1$ unabhängig voneinander für Wasserstoff, Halogen, $C_1$- bis $C_4$-Alkyl oder $C_1$- bis $C_4$-Alkoxy stehen und

$X^-$ einen anionischen Rest bedeutet,

mit Farbstoffen der allgemeinen Formel

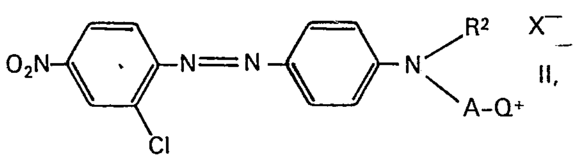

II,

in welcher

$R^2$ für einen $C_1$- bis $C_4$-Alkyl- oder einen Benzylrest,

A für einen $C_2$- bis $C_4$-Alkylenrest,

Q für eine Ammonium- oder Cyclammoniumgruppe und

$X^-$ für einen anionischen Rest stehen,

und mit Farbstoffen der allgemeinen Formel

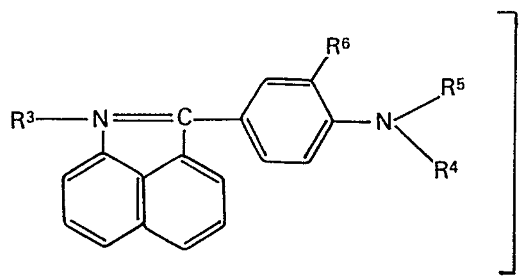

III,

in welcher

$R^3$ für einen $C_1$- bis $C_4$-Alkylrest,

$R^4$ für Wasserstoff, einen $C_1$- bis $C_4$-Alkyl- oder einen Phenylrest,

$R^5$ für einen $C_1$- bis $C_4$-Alkylrest und

$R^6$ für Wasserstoff, einen $C_1$- bis $C_4$-Alkyl- oder einen $C_1$- bis $C_4$-Alkoxyrest stehen,

die Reste $R^5$ und $R^6$ auch unter Bildung eines teilhydrierten Ringes verbunden sein können und

$X^-$ einen anionischen Rest bedeutet,

nach üblichen Färbeverfahren auf die Faser aufbringt.

Die in den Formeln enthaltenen aliphatischen und aromatischen Reste können substituiert sein, vorzugsweise durch Hydroxyl, $C_1$- bis $C_4$-Alkyl, $C_1$- bis $C_4$-Alkoxy, Chlor, Brom, $C_1$- bis $C_4$-Alkylsulfonyl, ggf. durch $C_1$- bis $C_4$-bis- oder monoalkyliertes Sulfonamid oder Sulfonformamidinreste der Formel

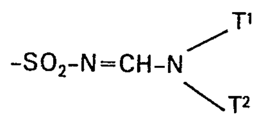

$T^1$ für $C_1$- bis $C_4$-Alkyl oder Phenyl und $T^2$ für $C_1$- bis $C_4$-Alkyl stehen.

Geeignete ggf. substituierte $C_1$- bis $C_4$-Alkylreste sind:

Methyl, Ethyl, Propyl, Isopropyln, n-Butyl, Isobutyl, und tert. Butyl, Cyanethyl, Methoxyethyl, Ethoxyethyl, β-Chlorethyl, β-Hydroxyethyl, β-Hydroxypropyl und β,γ-Dihydroxypropyl.

Geeignete ggf. substituierte $C_1$- bis $C_4$-Alkoxyreste sind:

Methoxy, Ethoxy, Propoxy, Isopropoxy, Butoxy, Methoxyethoxy, Ethoxyethoxy, Butoxyethoxy und Hydroxyethoxy.

Geeignete ggf. substituierte Phenylreste sind: Phenyl, 4-Chlor-phenyl, 4-Brom-phenyl, 4-Methoxy-phenyl, 2-Methoxy-phenyl, 4-Ethoxy-phenyl, 2-Ethoxy-phenyl.

Geeignete Alkylenreste sind:

1,2-Ethylen, 1,2-Propylen, 1,3-Propylen, 1,4-Butylen.

Wenn $R^5$ und $R^6$ unter Bildung eines teilhydrierten Ringes verbunden sind, können sie beispielsweise mit dem an sie gebundenen Stickstoffatom und Benzolring einen Indolin-, Tetrahydrochinolin-, Benzoxazin- und Tetrahydrochinoxalinring

bilden, die z.B. durch $C_1$- bis $C_4$-Alkylgruppen substituiert sein können.

Geeignete Ammonium- und Cyclammoniumreste sind:

Trimethylammonium, Triethylammonium, Benzyldimethylammonium, Hydroxyethyldimethylammonium, Hydroxypropyldimethylammonium, Aminodimethylammonium und der Pyridiniumrest.

Als Anionen eignen sich:

anorganische und organische Säurereste, soweit sie nicht die Löslichkeit der Farbstoffe nachteilig beeinflussen.

Unter den erfindungsgemässen Farbstoffen besonders bevorzugt sind solche der allgemeinen Formel

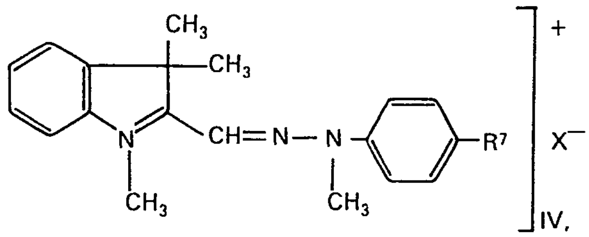

IV,

in welcher

$R^7$ für Methyl, Methoxy oder Ethoxy steht,

in Mischung mit Farbstoffen der allgemeinen Formel

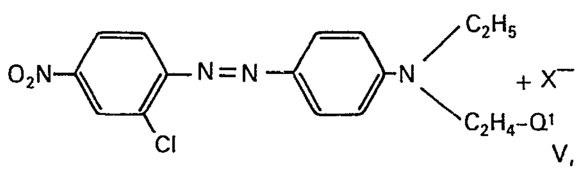

V,

in welcher

$Q^1$ für den Trimethylammonium-, Benzyldimethylammonium-, Hydroxypropyldimethylammonium- oder den Pyridiniumrest steht,

und mit Farbstoffen der Formel

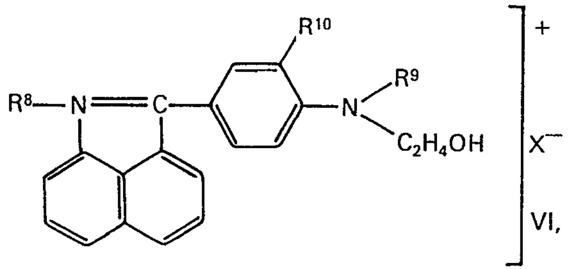

VI,

in welcher

$R^8$ für Methyl oder Ethyl,

$R^9$ für Methyl, Ethyl oder Phenyl,

$R^{10}$ für Wasserstoff oder

$R^9$ und $R^{10}$ gemeinsam mit dem Stickstoff und dem Benzolring für den 2,2,4-Trimethyl-tetrahydrochinolinring stehen und

$X^-$ ein Anion bedeutet,

wobei der Naphtholactamring in p-Stellung zum Stickstoff gegebenenfalls durch Chlor, Brom, $C_1$- bis $C_4$-Alkylsulfonyl, ggf. durch $C_1$- bis $C_4$-mono- oder bis-alkyliertes Sulfonamid oder Sulfonformamidinreste der Formel

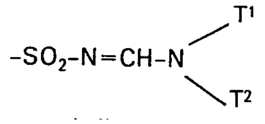

in welcher

$T^1$ für $C_1$- bis $C_4$-Alkyl oder Phenyl und

$T^2$ für $C_1$- bis $C_4$-Alkyl stehen, substituiert sein kann.

Die einzusetzenden Farbstoffmengen, bezogen auf Substrat, betragen vorzugsweise bei den Farbstoffen der Formel I 0,2 bis 0,5%, bei den Farbstoffen der Formel II 0,15 bis 0,5% und bei den Farbstoffen der Formel III 0,6 bis 1,2%. Die Farbstoffmischungen lassen sich bei allen üblichen Färbeverfahren einsetzen, beispielsweise zur Färbung von Kreuzspulen im Flottenverhältnis 1/10 oder zur Strangfärbung im Flottenverhältnis 1/40. Bei einer Färbetemperatur von 97–104°C beträgt die Färbedauer 60–120 min.

Gegenstand der Erfindung sind ausserdem Farbstoffmischungen, die einen Farbstoff der Formeln I, II und III enthalten. Vorzugsweise enthalten die Mischungen die Farbstoffe I, II und III im Gewichtsverhältnis 2–5:1,5–5:6–12.

Die erfindungsgemässen Farbstoffmischungen zeigen eine hohe thermische und hydrolytische Stabilität. Sie lassen sich in einem breiten pH-Bereich anwenden und ergeben beim Dämpfen kein Anbluten weisser Begleitfasern.

Die Konstitutionen der in den Beispielen eingesetzten Farbstoffe sind in der im Anschluss an die Beispiele angegebenen Tabelle zusammengefasst.

Beispiel 1

Polyacrylnitrilstranggarn wird im Flottenverhältnis 1/40 in einem Färbebad gefärbt, das pro Liter 0,098 g des Farbstoffes der Formel 1, 0,094 g des Farbstoffes der Formel 2 und 0,198 g des Farbstoffes der Formel 3 sowie 0,06 g des Umsetzungsproduktes von Oleylalkohol mit 56 mol Ethylenoxid enthält und das mit 60%iger Essigsäure auf einen pH von 4,5 eingestellt wurde. Das Färbebad wird zum Sieden erhitzt und 90 min bei Siedetemperatur gefärbt. Anschliessend wird das Stranggarn gespült und getrocknet. Es ist in einem tiefen Schwarz gefärbt.

Ersetzt man den Farbstoff der Formel 2 durch die gleiche Gewichtsmenge des Farbstoffes der Formel 4 und verfährt sonst in gleicher Weise, so ist das Polyacrylnitrilgarn gleichfalls in einem tiefen Schwarz gefärbt.

Beispiel 2

Kreuzspulen mit Polyacrylnitrilgarn werden in einem Flottenverhältnis von 1/10 in einen Färbeapparat eingebracht, dessen Färbebad je Liter 0,391 g des Farbstoffes der Formel 1, 0,378 g des Farbstoffes der Formel 5 und 0,792 g des Farbstoffes der Formel 3 sowie 0,25 g des in Beispiel 1 verwendeten Färbereihilfsmittels enthält. Man

stellt mit 60%iger Essigsäure auf pH 4,5 und färbt 60 min bei 104°C.

Die Kreuzspulen zeigen eine egale Durchfärbung. Das Polyacrylnitrilgarn ist in einem tiefen Schwarz gefärbt.

Beispiel 3

Stranggarn aus Polyacrylnitrilfasern wird im Flottenverhältnis 1/40 in ein Färbebad eingebracht, das im Liter 0,098 g des Farbstoffes der Formel 1, 0,094 g des Farbstoffes der Formel 2 und 0,24 g des Farbstoffes der Formel 6 sowie 0,06 g des in Beispiel 1 verwendeten Färbereihilfsmittels enthält. Das Färbebad wird mit 60%iger Essigsäure auf einen pH von 4,5 gestellt und die Färbebadtemperatur auf 98°C gebracht. Nach 90 min Färbedauer werden die Fasern gespült und getrocknet. Sie sind in einem tiefen Schwarz angefärbt.

Beispiel 4

Polyacrylnitrilfasern werden im Flottenverhältnis 1/40 in ein Färbebad eingebracht, dass im Liter 0,098 g des Farbstoffes der Formel 1, 0,094 g des Farbstoffes der Formel 7 und 0,198 g des Farbstoffes der Formel 3 sowie 0,06 g des in Beispiel 1 verwendeten Färbereihilfsmittels enthält. Das Färbebad wird mit 60%iger Essigsäure auf pH 4,5 gestellt und auf 98°C erwärmt. Man färbt 90 min bei dieser Temperatur und spült und trocknet anschliessend die Polyacrylnitrilfasern. Sie sind in tiefem Schwarz eingefärbt.

Verwendet man anstelle des Farbstoffes der Formel 7 die gleiche Menge des Farbstoffes der Formel 8 und verfährt sonst in gleicher Weise, so erhält man ebenfalls eine tiefe Schwarzfärbung.

Beispiel 5

Polyacrylnitrilfasern werden im Flottenverhältnis 1/40 in ein Färbebad eingebracht, das im Liter 0,086 g des Farbstoffes der Formel 9, 0,147 g des Farbstoffes der Formel 2 und 0,198 g des Farbstoffes der Formel 3 sowie 0,06 g des in Beispiel 1 verwendeten Färbereihilfsmittels enthält. Das Färbebad wird mit 60%iger Essigsäure auf pH 4,5 eingestellt und innerhalb von 30 min zum Sieden erhitzt. Man färbt 90 min bei Siedetemperatur und spült und trocknet anschliessend die Fasern. Sie sind in einem tiefen Schwarz eingefärbt.

Beispiel 6

Kreuzspulen mit Polyacrylnitrilgarn werden im Flottenverhältnis 1/10 in einer Färbeapparatur gefärbt, deren Färbebad je Liter 0,368 g des Farbstoffes der Formel 1, 0,5 g des Farbstoffes der Formel 2 und 0,7 g des Farbstoffes der Formel 10 sowie 0,25 g des in Beispiel 1 verwendeten Färbereihilfsmittels enthält. Das Färbebad wird mit 60%iger Essigsäure auf pH 4,5 eingestellt, die Färbetemperatur auf 104°C gebracht und 60 min bei dieser Temperatur gefärbt. Danach wird das Garn gespült und getrocknet. Es ist in einem tiefen Schwarz gefärbt.

Beispiel 7

Polyacrylnitrilgarn wird im Flottenverhältnis 1/40 in ein Färbebad eingebracht, das im Liter 0,069 g des Farbstoffes der Formel 1, 0,21 g des Farbstoffes der Formel 2 und 0,3 g des Farbstoffes der Formel 11 sowie 0,06 g des in Beispiel 1 erwähnten Färbereihilfsmittels enthält. Das Färbebad wird mit 60%iger Essigsäure auf pH 4,5 eingestellt und die Temperatur des Färbebades auf 98°C erhöht. Man färbt 120 min bei dieser Temperatur und spült und trocknet anschliessend das Polyacrylnitrilgarn. Es ist in einem tiefen Schwarz eingefärbt.

Beispiel 8

Ein Mischgewebe aus 70% Polyacrylnitril und 30% Wolle wird im Flottenverhältnis 1/40 in ein Färbebad eingebracht, das im Liter 0,121 g des Farbstoffes der Formel 1, 0,103 g des Farbstoffes der Formel 2 und 0,263 g des Farbstoffes der Formel 12 enthält sowie 0,06 g des in Beispiel 1 erwähnten Färbereihilfsmittels. Das Färbebad wird mit 60%iger Essigsäure auf pH 4,5 eingestellt, auf 98°C erwärmt und 90 min bei dieser Temperatur gefärbt. Der Polyacrylnitrilanteil des Mischgewebes ist in einem tiefen Schwarz eingefärbt.

Beispiel 9

Polyacrylnitrilgarn wird im Flottenverhältnis 1/40 in ein Färbebad eingebracht, das im Liter 0,086 g des Farbstoffes der Formel 1, 0,157 g des Farbstoffes der Formel 2 und 0,3 g des Farbstoffes der Formel 13 sowie 0,06 g des in Beispiel 1 erwähnten Färbereihilfsmittels enthält. Das Färbebad wird mit 60%iger Essigsäure auf pH 4,5 eingestellt, die Färbetemperatur auf 98°C gebracht und 120 min bei dieser Temperatur gefärbt. Danach wird das Garn gespült und getrocknet. Es ist in einem tiefen Schwarz eingefärbt.

Beispiel 10

Kreuzspulen mit Polyacrylnitrilgarn werden im Flottenverhältnis 1/10 in einem Färbeapparat gefärbt, dessen Färbebad im Liter 0,368 g des Farbstoffes der Formel 1, 0,63 g des Farbstoffes der Formel 2 und 1,0 g des Farbstoffes der Formel 14 sowie 0,25 g des in Beispiel 1 erwähnten Färbereihilfsmittels enthält. Das Färbebad wird mit 60%iger Essigsäure auf pH 4,5 eingestellt und auf 98°C erwärmt. Dann wird 120 min bei dieser Temperatur gefärbt und die Kreuzspulen in üblicher Weise fertiggestellt. Das Polyacrylnitrilgarn ist in einem tiefen Schwarz gefärbt.

Beispiel 11

Polyacrylnitrilfasern werden im Flottenverhältnis 1/40 in ein Färbebad eingebracht, das im Liter 0,081 g des Farbstoffes der Formel 1, 0,158 g des Farbstoffes der Formel 2 und 0,375 g des Farbstoffes der Formel 15 sowie 0,06 g des in Beispiel 1 verwendeten Färbereihilfsmittels enthält. Das Färbebad wird mit 60%iger Essigsäure auf pH 4,5 eingestellt und auf Siedetemperatur gebracht. Nach 120 min Färben bei 98°C werden die Fasern

gespült und getrocknet. Sie sind in einem tiefen Schwarz eingefärbt.

Beispiel 12

Polyacrylnitrilgarn wird im Flottenverhältnis 1/40 in ein Färbebad eingebracht, das je Liter 0,081 g des Farbstoffes der Formel 1, 0,168 g des Farbstoffes der Formel 2 und 0,275 g des Farbstoffes der Formel 16 sowie 0,06 g des in Beispiel 1 verwendeten Färbereihilfsmittels enthält. Das Färbebad wird mit 60%iger Essigsäure auf einen pH von 4,5 eingestellt, zum Sieden erhitzt und 120 min auf dieser Temperatur gehalten. Anschliessend wird das Garn gespült und getrocknet. Es ist in einem tiefen Schwarz eingefärbt.

Beispiel 13

Ein Mischgewebe aus 70% Polyacrylnitril und 30% Wolle wird im Flottenverhältnis 1/40 in ein Färbebad eingebracht, das im Liter 0,069 g des Farbstoffes der Formel 1, 0,252 g des Farbstoffes der Formel 2 und 0,325 g des Farbstoffes der Formel 17 sowie 0,06 g des in Beispiel 1 erwähnten Färbereihilfsmittels enthält. Das Färbebad wird mit 60%iger Essigsäure auf pH 4,5 eingestellt, auf 98°C erwärmt und 90 min bei dieser Temperatur gehalten. Danach wird das Gewebe gespült und getrocknet. Der Polyacrylnitrilanteil ist in einem tiefen Schwarz angefärbt.

Beispiel 14

Polyacrylnitrilgarn wird in einem Strangfärbeapparat im Flottenverhältnis 1/40 in ein Färbebad eingebracht, das im Liter 0,069 g des Farbstoffes der Formel 1, 0,158 g des Farbstoffes der Formel 2 und 0,175 g des Farbstoffes der Formel 18 sowie 0,06 g des in Beispiel 1 erwähnten Färbereihilfsmittels enthält. Das Färbebad wird mit 60%iger Essigsäure auf pH 4,5 eingestellt, auf 98°C erwärmt und 120 min bei dieser Temperatur gehalten. Dann wird das Polyacrylnitrilgarn gespült und getrocknet. Es ist in einem tiefen Schwarz angefärbt.

Verwendet man anstelle des Farbstoffes der Formel 18 0,25 g des Farbstoffes der Formel 19 und verfährt sonst in gleicher Weise, so erhält man ebenfalls tiefschwarzgefärbtes Polyacrylnitrilgarn.

Beispiel 15

Kreuzspulen mit Polyacrylnitrilgarn werden in einem Färbeapparat im Flottenverhältnis 1/10 gefärbt, wobei das Färbebad je Liter 0,299 g des Farbstoffes der Formel 1, 0,63 g des Farbstoffes der Formel 2 und 1,0 g des Farbstoffes der Formel 20 sowie 0,25 g des in Beispiel 1 beschriebenen Färbereihilfsmittels enthält. Das Färbebad wird mit 60%iger Essigsäure auf pH 4,5 eingestellt, die Temperatur des Färbebades auf 98°C erhöht und 120 min bei dieser Temperatur gefärbt. Die Kreuzspulen werden in üblicher Weise fertiggestellt und sind dann gleichmässig in einem tiefen Schwarz durchgefärbt.

Beispiel 16

Polyacrylnitrilgarn wird in einem Strangfärbeapparat im Flottenverhältnis 1/40 in ein Färbebad eingebracht, das im Liter 0,098 g des Farbstoffes der Formel 1, 0,094 g des Farbstoffes der Formel 2 und 0,22 g des Farbstoffes der Formel 21 sowie 0,06 g des in Beispiel 1 erwähnten Färbereihilfsmittels enthält. Das Färbebad wird mit 60%iger Essigsäure auf pH 4,5 eingestellt, zum Sieden erhitzt und 120 min bei dieser Temperatur gehalten. Dann wird das Garn gespült und getrocknet. Es ist in einem tiefen Schwarz gefärbt.

| Formel-Nr. | Konstitutionen der in den Beispielen verwendeten Farbstoffe |
|---|---|
| 1 | 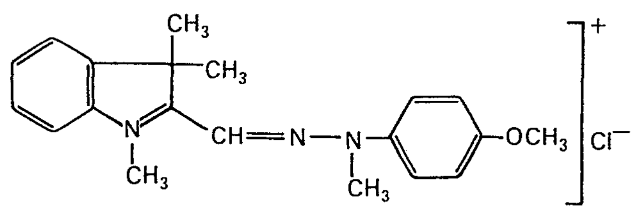 |
| 2 | 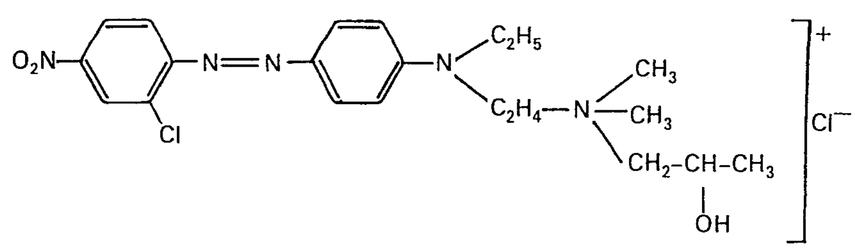 |

| Formel-Nr. | Konstitutionen der in den Beispielen verwendeten Farbstoffe |
|---|---|
| 3 | 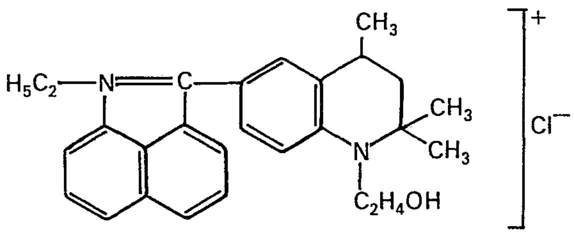 |
| 4 | 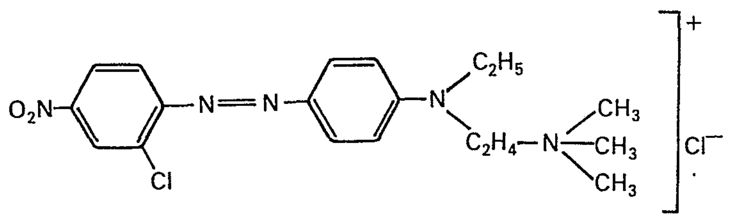 |
| 5 | 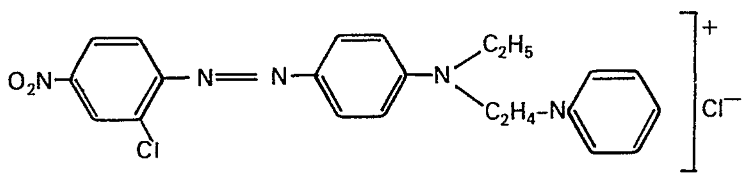 |
| 6 | 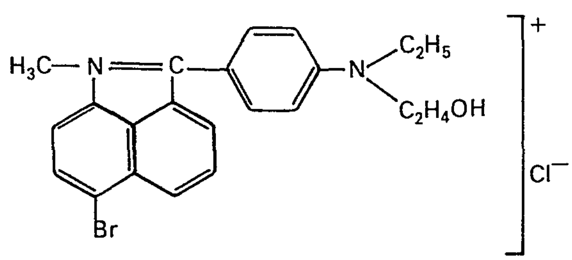 |
| 7 | 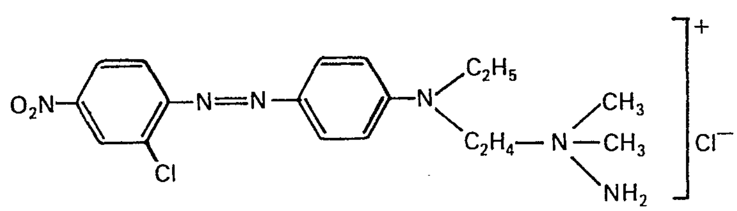 |
| 8 | 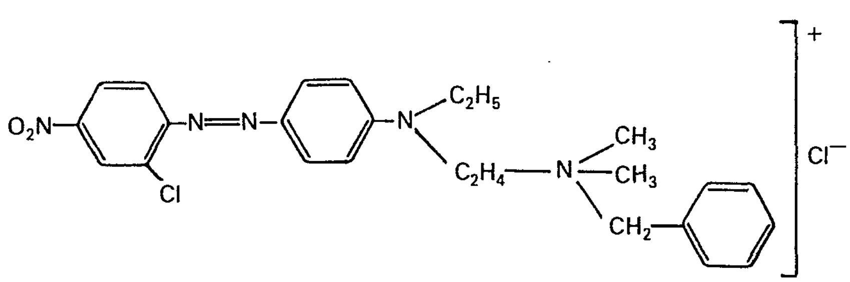 |

| Formel-Nr. | Konstitutionen der in den Beispielen verwendeten Farbstoffe |
|---|---|
| 9 | 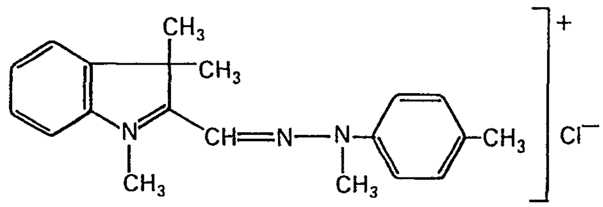 |
| 10 | 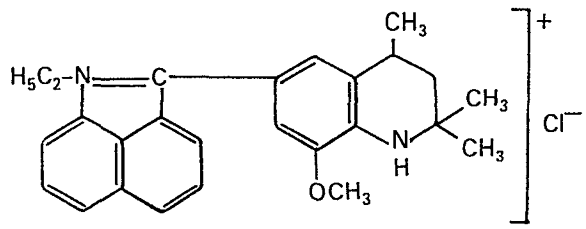 |
| 11 | 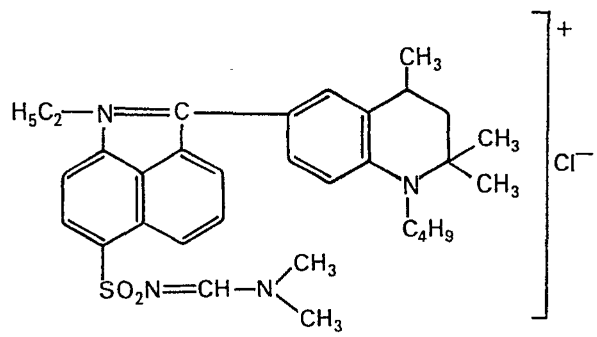 |
| 12 | 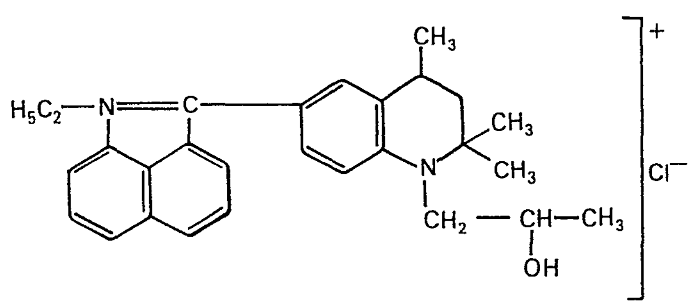 |
| 13 | 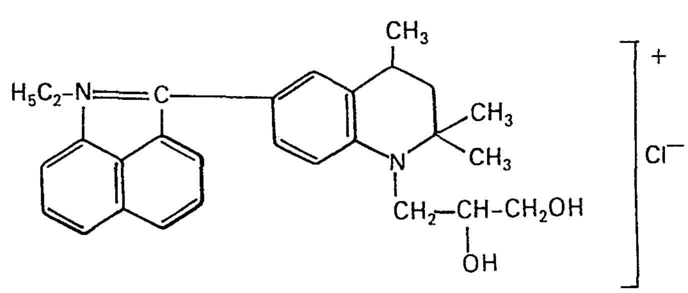 |

| Formel-Nr. | Konstitutionen der in den Beispielen verwendeten Farbstoffe |
|---|---|
| 14 | 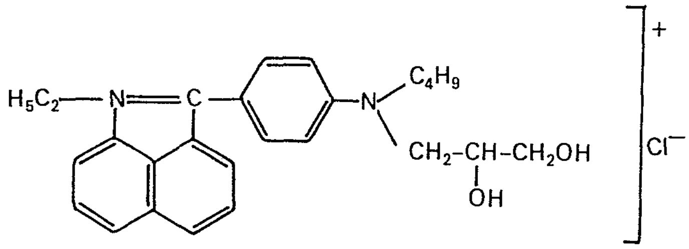 |
| 15 | 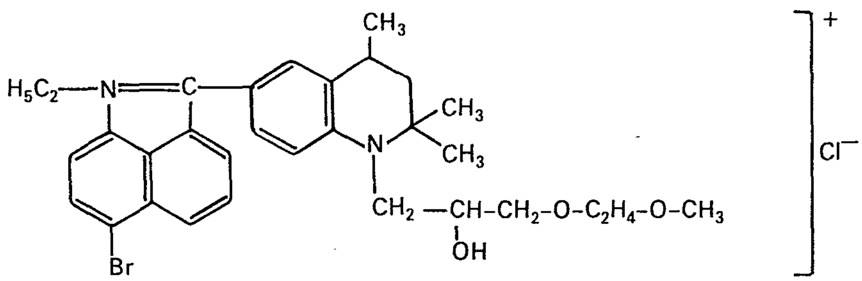 |
| 16 | 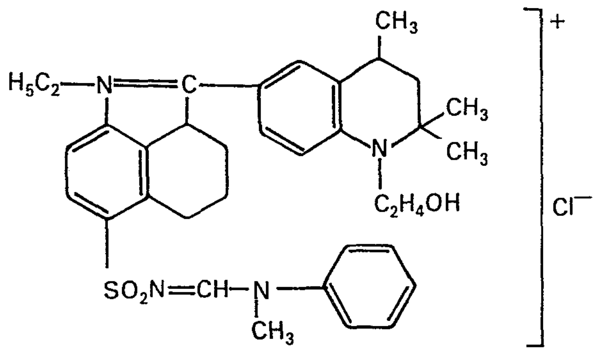 |
| 17 | 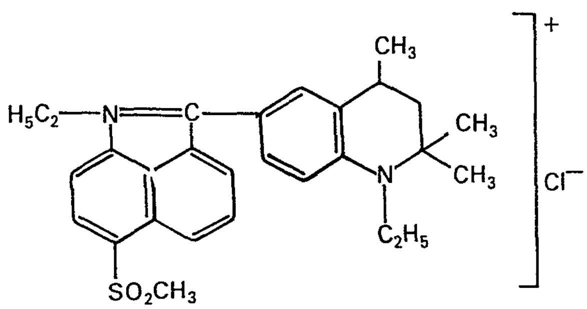 |
| 18 | 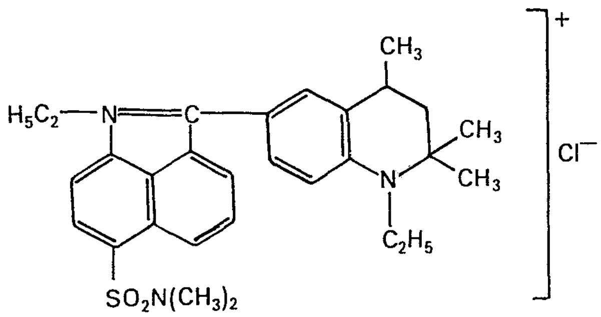 |

| Formel-Nr. | Konstitutionen der in den Beispielen verwendeten Farbstoffe |
| --- | --- |
| 19 | 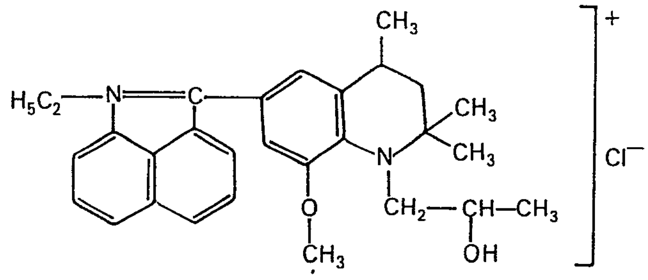 |
| 20 | 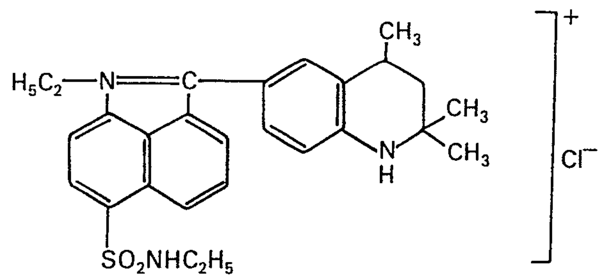 |
| 21 | 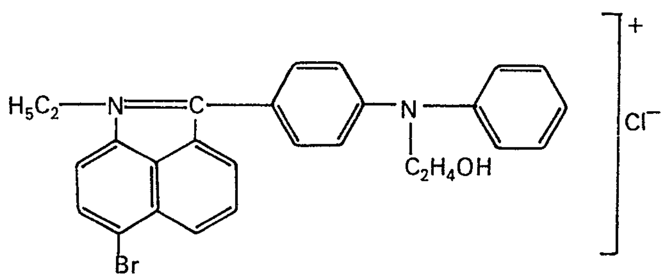 |

**Patentansprüche**

1. Verfahren zum Färben von sauermodifizierten Synthesefasern in tiefen schwarzen Farbtönen, dadurch gekennzeichnet, dass man eine Mischung von Farbstoffen der allgemeinen Formel

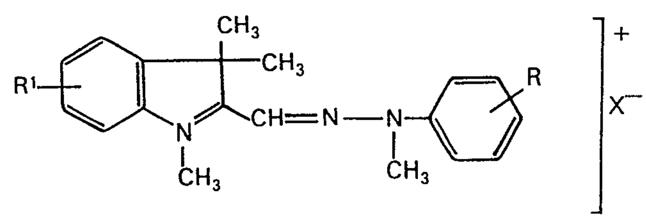

I,

in welcher
R und R¹ unabhängig voneinander für Wasserstoff, Halogen, $C_1$- bis $C_4$-Alkyl oder $C_1$- bis $C_4$-Alkoxy stehen und
$X^-$ einen anionischen Rest bedeutet,
mit Farbstoffen der allgemeinen Formel

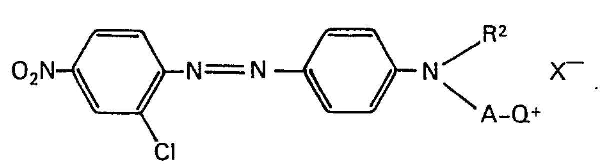

II,

in welcher
$R^2$ für einen $C_1$- bis $C_4$-Alkyl- oder einen Benzylrest,
A für einen $C_2$- bis $C_4$-Alkylenrest,
Q für eine Ammonium- oder Cyclammoniumgruppe und
$X^-$ für einen anionischen Rest stehen,
und mit Farbstoffen der allgemeinen Formel

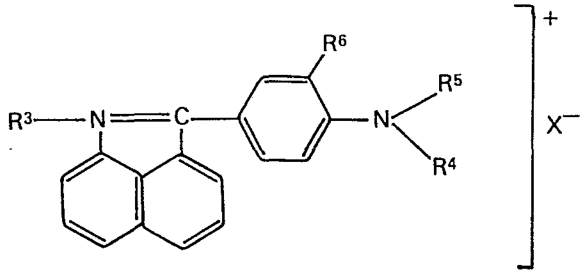

III,

in welcher
$R^3$ für einen $C_1$- bis $C_4$-Alkylrest,
$R^4$ für Wasserstoff, einen $C_1$- bis $C_4$-Alkyl- oder einen Phenylrest,
$R^5$ für einen $C_1$- bis $C_4$-Alkylrest und
$R^6$ für Wasserstoff, einen $C_1$- bis $C_4$-Alkyl- oder einen $C_1$- bis $C_4$-Alkoxyrest stehen,
die Reste $R^5$ und $R^6$ auch unter Bildung eines teilhydrierten Ringes verbunden sein können und
$X^-$ einen anionischen Rest bedeutet,
wobei die in den Formeln I, II und III enthaltenen aliphatischen und aromatischen Reste ggf. durch Hydroxyl, $C_1$- bis $C_4$-Alkyl, $C_1$- bis $C_4$-Alkoxy, Chlor, Brom, $C_1$- bis $C_4$-Alkylsulfonyl, ggf. durch $C_1$- bis $C_4$- mono- oder bis-alkyliertes Sulfonamid oder Sulfonformamidinreste der Formel

$$-SO_2-N=CH-N\begin{matrix}T^1\\T^2\end{matrix}$$

, in welcher

$T^1$ für $C_1$- bis $C_4$-Alkyl oder Phenyl und
$T^2$ für $C_1$- bis $C_4$-Alkyl stehen, substituiert sein können,
nach üblichen Färbeverfahren auf die Faser aufbringt.

2. Verfahren zum Färben von Polyacrylnitrilmaterialien in tiefen schwarzen Farbtönen, dadurch gekennzeichnet, dass man eine Mischung von Farbstoffen der allgemeinen Formel

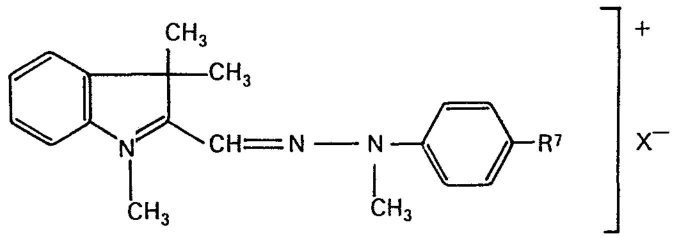

IV,

worin
$R^7$ für Methyl, Methoxy oder Ethoxy steht und
$X^-$ ein Anion bedeutet,
mit Farbstoffen der allgemeinen Formel

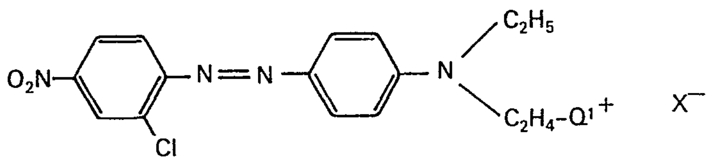

V,

worin
$Q^1$ für den Trimethylammonium-, Benzyldimethylammonium-, Hydroxypropyldimethylammonium- oder den Pyridiniumrest steht und
$X^-$ ein Anion bedeutet,
und mit Farbstoffen der allgemeinen Formel

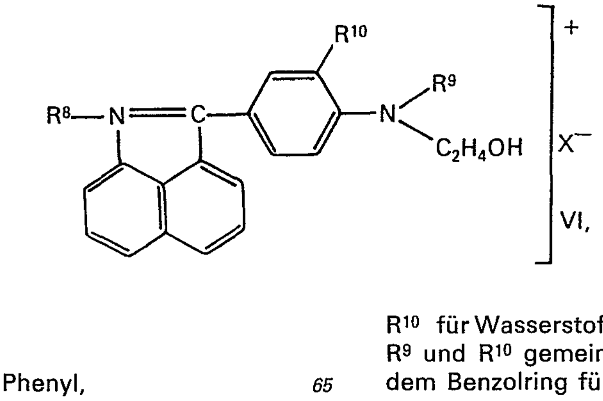

VI,

worin
$R^8$ für Methyl oder Ethyl,
$R^9$ für Methyl, Ethyl oder Phenyl,
$R^{10}$ für Wasserstoff oder
$R^9$ und $R^{10}$ gemeinsam mit dem Stickstoff und dem Benzolring für den 2,2,4-Trimethyl-tetrahydrochinolinring stehen und
$X^-$ ein Anion bedeutet,
wobei der Naphtholactamring in p-Stellung zum Stickstoff gegebenenfalls durch Chlor, Brom, $C_1$- bis $C_4$-Alkylsulfonyl, ggf. durch $C_1$- bis $C_4$-mono- oder bis-alkyliertes Sulfonamid oder Sulfonformamidinreste der Formel

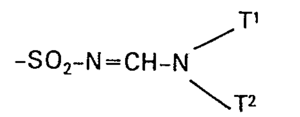
,

in welcher
$T^1$ für $C_1$- bis $C_4$-Alkyl oder Phenyl und
$T^2$ für $C_1$- bis $C_4$-Alkyl stehen,
substituiert sein kann,
nach üblichen Färbeverfahren auf die Faser aufbringt.

3. Verfahren zum Färben von Polyacrylnitrilmaterialien in tiefen schwarzen Farbtönen, dadurch gekennzeichnet, dass man eine Mischung von Farbstoffen der Formeln:

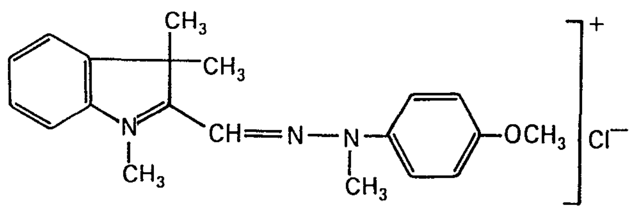
VII

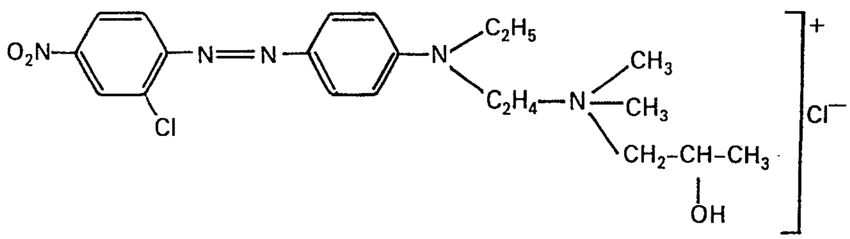
VIII

und

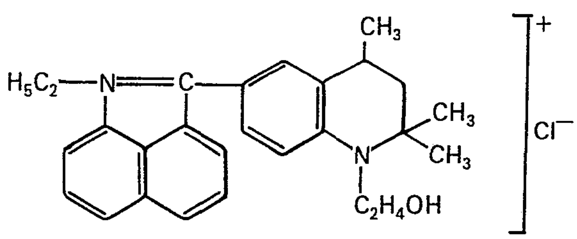
IX

nach üblichen Färbeverfahren auf die Faser aufbringt.

4. Verfahren gemäss Anspruch 1, dadurch gekennzeichnet, dass die einzusetzenden Reinfarbstoffmengen, bezogen auf Fasereinsatzmenge, bei den Farbstoffen der Formel I 0,2 bis 0,5%, bei den Farbstoffen der Formel II 0,15 bis 0,5% und bei den Farbstoffen der Formel III 0,6 bis 1,2% betragen.

5. Farbstoffmischungen, die die Farbstoffe der Formeln I, II und III im Gewichtsverhältnis 2-5:1,5-5:6-12 enthalten.

**Claims**

1. Process for dyeing acid-modified synthetic fibres in deep black shades, characterised in that a mixture of dyestuffs of the general formula

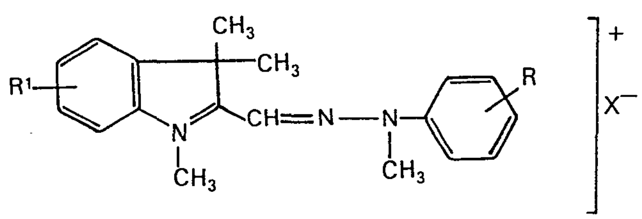
I,

wherein
R and $R^1$ independently of one another represent hydrogen, halogen, $C_1$- to $C_4$-alkyl or $C_1$- to $C_4$-alkoxy and
$X^-$ denotes an anionic radical,
with dyestuffs of the general formula

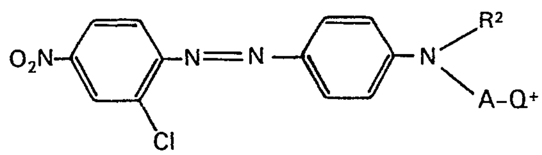

X⁻ II,

wherein

$R^2$ represents a $C_1$- to $C_4$-alkyl radical or a benzyl radical,

A represents a $C_2$- to $C_4$-alkylene radical,

Q represents an ammonium group or cycloammonium group and

$X^-$ represents an anionic radical,

and with dyestuffs of the general formula

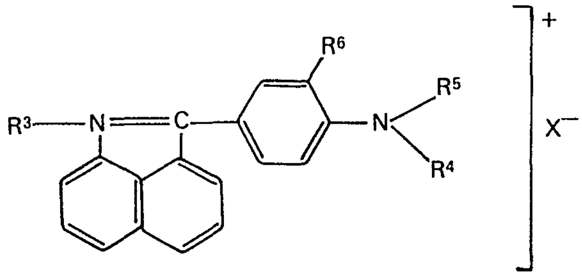

$X^-$ III,

wherein

$R^3$ represents a $C_1$- to $C_4$-alkyl radical,

$R^4$ represents hydrogen, a $C_1$- to $C_4$-alkyl radical or a phenyl radical,

$R^5$ represents a $C_1$- to $C_4$-alkyl radical and

$R^6$ represents hydrogen, a $C_1$- to $C_4$-alkyl radical or a $C_1$- to $C_4$-alkoxy radical,

the radicals $R^5$ and $R^6$ can also be linked through the formation of a partially hydrogenated ring, and

$X^-$ denotes an anionic radical,

it being possible for the aliphatic and aromatic radicals contained in the formulae I, II and III to be optionally substituted by hydroxyl, $C_1$- to $C_4$-alkyl, $C_1$- to $C_4$-alkoxy, chlorine, bromine or $C_1$- to $C_4$-alkylsulphonyl, or to be optionally substituted by $C_1$- to $C_4$-mono-alkylated or bis-alkylated sulphonamide or sulphoneformamidine radicals of the formula

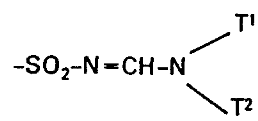

wherein

$T^1$ represents $C_1$- to $C_4$-alkyl or phenyl and

$T^2$ represents $C_1$- to $C_4$-alkyl,

is applied to the fibre according to customary dyeing processes.

2. Process for dyeing polyacrylonitrile materials in deep black shades, characterised in that a mixture of dyestuffs of the general formula

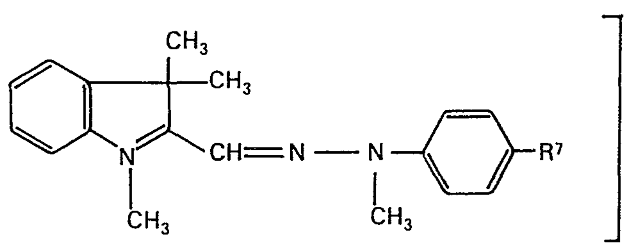

$X^-$ IV,

wherein

$R^7$ represents methyl, methoxy or ethoxy and

$X^-$ denotes an anion,

with dyestuffs of the general formula

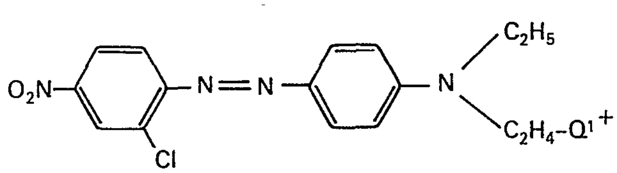

$X^-$ V,

wherein

$Q^1$ represents the trimethylammonium radical, the benzyldimethylammonium radical, the hydroxypropyldimethylammonium radical or the pyridinium radical and

$X^-$ denotes an anion,

and with dyestuffs of the general formula

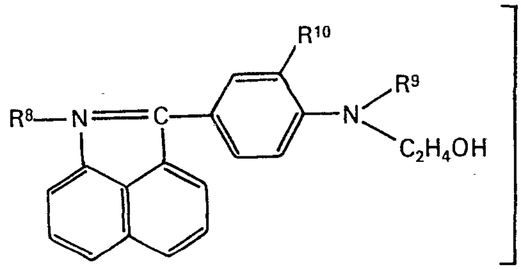

VI,

wherein
$R^8$ represents methyl or ethyl,
$R^9$ represents methyl, ethyl or phenyl,
$R^{10}$ represents hydrogen, or
$R^9$ and $R^{10}$, together with the nitrogen and the benzene ring, represent the 2,2,4-trimethyltetrahydroquinoline ring, and
$X^-$ denotes an anion,
it being possible for the naphtholactam ring to be optionally substituted in the p-position to the nitrogen, by chlorine, bromine or $C_1$- to $C_4$-alkylsulphonyl, or to be optionally substituted by $C_1$- to $C_4$-mono-alkylated or bis-alkylated sulphonamide or sulphoneformamidine radicals of the formula

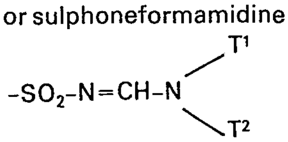

wherein
$T^1$ represents $C_1$- to $C_4$-alkyl or phenyl and
$R^2$ represents $C_1$- to $C_4$-alkyl,
is applied to the fibre according to customary dyeing processes.

3. Process for dyeing polyacrylonitrile materials in deep black shades, characterised in that a mixture of dyestuffs of the formulae:

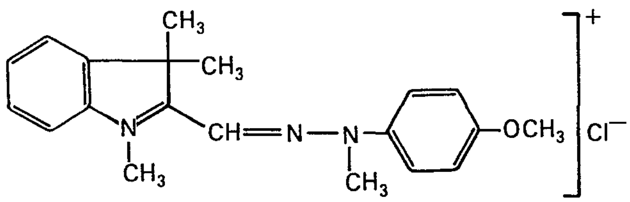

VII.

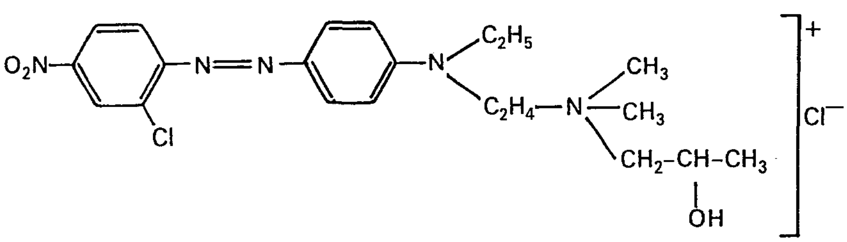

VIII

and

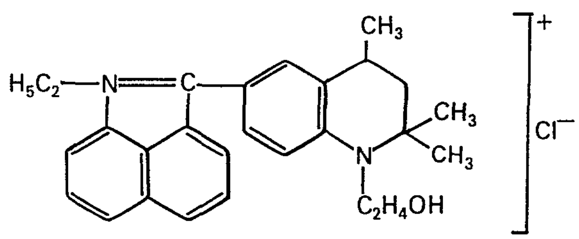

IX

dis applied to the fibre according to customary dyeing processes.

4. Process according to Claim 1, characterised in that the quantities to be employed, relative to the quantity of fibre used, of the pure dyestuff are 0.2 to 0.5% in the case of the dyestuffs of the formula I, 0.15 to 0.5% in the case of the dyestuffs of the formula II and 0.6 to 1.2% in the case of the dyestuffs of the formula III.

5. Dyestuff mixtures which contain the dyestuffs of the formulae I, II and III in the weight ratio 2-5:1.5-5:6-12.

**Revendications**

1. Procédé de teinture de fibres synthétiques modifiées par un acide dans des tons d'un noir intense, caractérisé en ce qu'on applique à la fibre par des procédés classiques de teinture un mélange de colorants de formule générale

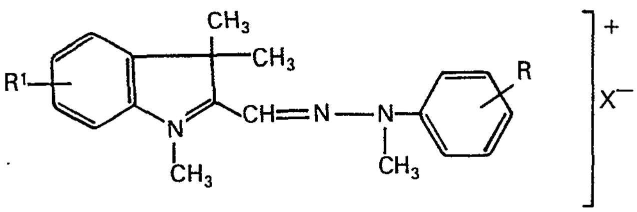

I,

dans laquelle

R et $R^1$ représentent, indépendamment l'un de l'autre, l'hydrogène, un halogène, un groupe alkyle en $C_1$ à $C_4$ ou un grupe alkoxy en $C_1$ à $C_4$ et

$X^-$ désigne un reste anionique,

avec des colorants de formule générale

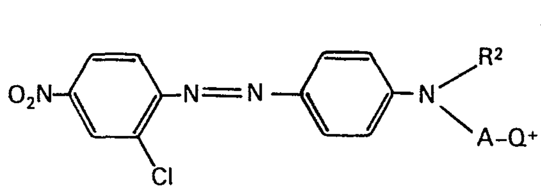

II,

dans laquelle

$R^2$ est un reste alkyle en $C_1$ à $C_4$ ou un reste benzyle,

A est un reste alkylène en $C_2$ à $C_4$,

Q est un groupe ammonium ou ammonium cyclique, et

$X^-$ désigne un reste anionique,

et avec des colorants de formule générale

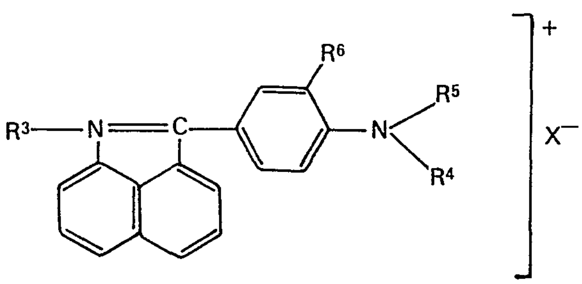

III,

dans laquelle

$R^3$ représente un reste alkyle en $C_1$ à $C_4$,

$R^4$ désigne l'hydrogène, un reste alkyle en $C_1$ à $C_4$ ou un reste phényle,

$R^5$ est un reste alkyle en $C_1$ à $C_4$, et

$R^6$ représente l'hydrogène, un reste alkyle en $C_1$ à $C_4$ ou un reste alkoxy en $C_1$ à $C_4$,

les restes $R^5$ et $R^6$ pouvant aussi être liés avec formation d'un noyau partiellement hydrogéné et

$X^-$ désigne un reste anionique,

les restes aliphatiques et aromatiques contenus dans les formules I, II et III pouvant éventuellement être substitués par des substituants hydroxyle, alkyle en $C_1$ à $C_4$, alkoxy en $C_1$ à $C_4$, du chlorure, du brome, des substituants (alkyle en $C_1$ à $C_4$) sulfonyle, des restes sulfamido ou sulfoformamidino éventuellement mono- ou bis-alkylés avec des radicaux alkyle en $C_1$ à $C_4$, de formule

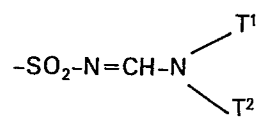

dans laquelle

$T^1$ est un reste alkyle en $C_1$ à $C_4$ ou phényle et

$T^2$ est un reste alkyle en $C_1$ à $C_4$.

2. Procédé de teinture de matières en polyacrylonitrile dans des tons d'un noir intense, caractérisé en ce qu'on applique à la fibre par des procédés classiques de teinture, un mélange de colorants de formule générale

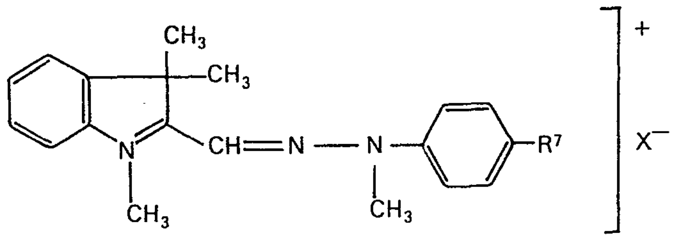

IV,

dans laquelle

$R^7$ est un groupe méthyle, méthoxy ou éthoxy et

$X^-$ est un anion,

avec des colorants de formule générale

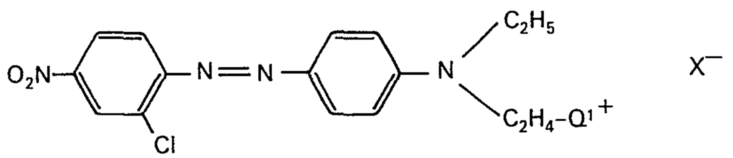

V,

dans laquelle

$Q^1$ désigne un reste triméthylammonium, benzyldiméthylammonium, hydroxypropyldiméthylammonium ou le reste pyridinium et

$X^-$ est un anion,

et avec des colorants de formule générale

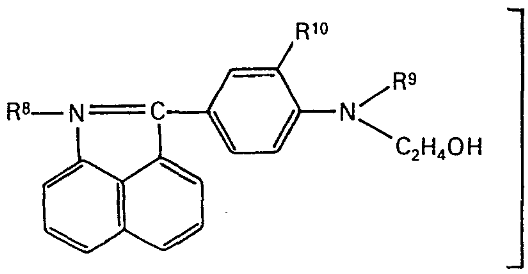

VI,

dans laquelle

$R^8$ est un reste méthyle ou éthyle,

$R^9$ est un reste méthyle, éthyle ou phényle,

$R^{10}$ est l'hydrogène ou

$R^9$ et $R^{10}$ forment, conjointement avec l'atome d'azote et le noyau benzénique, le noyau de 2,2,4-triméthyltétrahydroquinoléine et

$X^-$ est un anion,

le noyau de naphtolactame pouvant être substitué en position para par rapport à l'atome d'azote, éventuellement par du chlore, du brome, un substituant (alkyle en $C_1$–$C_4$)-sulfonyle, des restes sulfamido ou sulfoformamidino éventuellement mono- ou bis-alkylés avec des radicaux alkyle en $C_1$ à $C_4$, de formule

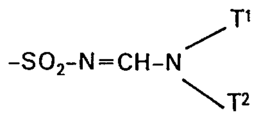

dans laquelle

$T^1$ est un groupe alkyle en $C_1$ à $C_4$ ou phényle et

$T^2$ est un groupe alkyle en $C_1$ à $C_4$.

3. Procédé de teinture de matières en polyacrylonitrile dans des tons d'un noir intense, caractérisé en ce qu'on applique à la fibre par des procédés classiques de teinture, un mélange de colorants de formules:

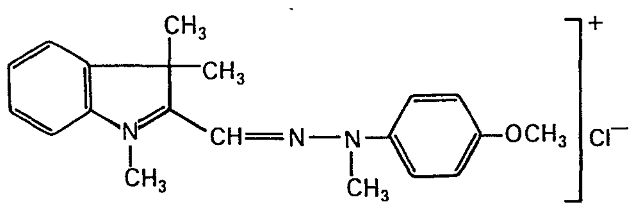

VII

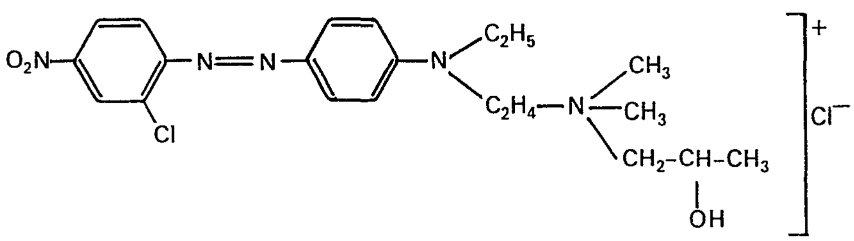

VIII

et

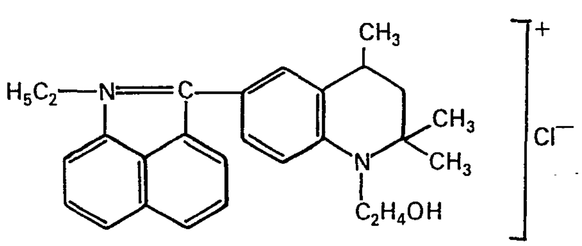

IX

4. Procédé suivant la revendication 1, caractérisé en ce que les quantités de colorants purs que l'on doit utiliser, par rapport à la quantité utilisée de fibre, s'élèvent à 0,2 à 0,5% dans le cas des colorants de formule I, à 0,15–0,5% dans le cas des colorants de formule II et à 0,6–1,2% dans le cas des colorants de formule III.

5. Mélanges de colorants contenant les colorants des formules I, II et III dans une proportion en poids de 2–5:1,5–5:6–12.